# EUROPEAN PATENT APPLICATION

(11) **EP 1 378 158 A1**
(43) Date of publication of application: **07.01.2004**
(21) Application number: 03012328.5
(22) Date of filing: 29.05.2003
(51) Int. Cl.: A01D 41/14

(54) **Apparatus to collect forage or similar agricultural products**

(30) Priority: 31.05.2002 IT UD20020120
(71) Applicant: F.LLI CRESSONI SpA, 46049 Volta Mantovana (MN) (IT)
(72) Inventor: Cressoni, Romano, 46049 Volta Mantovana (MN) (IT)
(74) Representative: Petraz, Gilberto Luigi

(57) **Abstract**

Apparatus (10) to collect forage or similar agricultural products, mounted on an agricultural collection machine (11), provided with a first and a second operating part (16, 17), each of which is equipped with substantially horizontal collection devices (13, 14), and supporting elements (15) able to be associated with the agricultural machine (11) in order to support the two operating parts (16, 17). The two operating parts (16, 17) assume respective working positions wherein they are adjacent to each other on a horizontal plane and protrude laterally and partly, on opposite sides, with respect to the agricultural machine (11). Each of the two operating parts (16, 17) is supported autonomously by the supporting elements (15). The first operating part (16) is able to slide axially with respect to the supporting elements (15), between the working position and an inactive position, wherein the operating part (16) is centered with respect to the agricultural machine (11). The second operating part (17) is translated, keeping itself substantially horizontal, between the working position and an inactive position wherein it is centered with respect to the agricultural machine (11) and positioned above the first operating part (16) .

## Description

### FIELD OF THE INVENTION

The present invention concerns an apparatus to collect agricultural products such as forage or suchlike, which is able to be mounted on the front part of an agricultural collection machine, such as for example a self-propelled hay-cutter, a fodder-cutter, or suchlike.

The apparatus according to the invention comprises two independent operating parts associated with a supporting structure. In the working or collection position, the two operating parts are aligned on the same horizontal plane, in proximity with the ground, so as thus to cover as wide a collection zone as possible, whereas in the inactive position, that is, when the agricultural machine is being transferred, they are arranged one above the other in order to occupy as little road space as possible, substantially equal to the length of one of the two operating parts. The movement of the two operating parts occurs in such a manner that the baricenter of the two remains substantially unchanged and allows optimum visibility to the driver.

### BACKGROUND OF THE INVENTION

An apparatus is known to collect forage, commonly known as a pick-up, which is able to be mounted on the front part of an agricultural machine. This known apparatus comprises two operating parts hinged on a supporting structure connected to the agricultural machine. The two operating parts can selectively assume a collection position, wherein they are aligned on the same horizontal plane, so that they cover a collection zone substantially double their width, or an inactive position, that is, when the agricultural machine is being transferred, in which they are arranged in a substantially vertical position, that is, rotated by 90° with respect to the collection position. In this second position however, they are arranged practically in front of the operator of the agricultural machine, so that they almost completely obscure his view, and he is therefore obliged to maneuver with great difficulty and little safety.

Applicant has devised, tested and embodied the present invention to overcome this shortcoming of the state of the art and to obtain other advantages.

### SUMMARY OF THE INVENTION

The present invention is set forth and characterized in the main claim, while the dependent claims describe other innovative characteristics of the present invention.

One purpose of the present invention is to achieve an apparatus to collect forage or similar agricultural products, able to be arranged on the front part of an agricultural collection machine, transversely to the longitudinal axis thereof, which in the working position allows to operate on the widest possible collection zone, whereas in the inactive position, that is, when the agricultural machine is being transferred, it occupies the minimum space possible.

Another purpose of the present invention is to achieve an apparatus which, even when it is in the inactive position, allows the operator of the agricultural machine optimum visibility when driving, even of the section of road near the machine.

Another purpose is to achieve an apparatus wherein the operating parts of which it consists, in the changeover from one to the other of said working and inactive positions, are subjected to movements reduced to a minimum and without unbalancing the weights.

In accordance with these purposes, the apparatus according to the present invention comprises two operating parts each provided with substantially horizontal collection means and both supported, autonomously, by supporting means able to be associated with the agricultural machine. A first of the two operating parts is able to slide axially with respect to the supporting means, between an inactive position wherein it is centered with respect to said agricultural machine, and a working position wherein it is laterally displaced with respect to the agricultural machine. A second of said two operating parts is able to be translated, keeping itself substantially horizontal, between an inactive position wherein it is centered with respect to said agricultural machine and above said first part, and a working position wherein it is aligned horizontally with said first operating part and displaced laterally with respect to said agricultural machine, on the opposite side to that of said first operating part. Actuation means are provided to effect the movements of said operating parts.

Advantageously, according to another characteristic of the present invention, the actuation means operate in coordinated manner, so that the baricenter of the combination consisting of said two operating parts remains substantially in a centered position even during these movements.

The aforesaid actuation means comprise at least a fluid-dynamic actuator associated with the supporting means and able to make a first elbow-shaped arm rotate, having a first end hinged on the supporting means and a second end connected to a first pin attached to the second operating part.

According to a variant, a second elbow-shaped arm is hinged at one end to the supporting means, having the other end connected to a second pin also attached to the second operating part, so as to assist the action of the first arm during the movement of the second operating part.

According to a preferential form of embodiment, the point where the first arm is hinged on the supporting means is in a higher position with respect to the axis of action of the fluid-dynamic actuator, so that, during the actuation of the latter, a moment is generated that makes the first elbow-shaped arm rotate.

In this way all the above purposes are achieved, and at the same time all the shortcomings of known apparatuses are eliminated.

### BRIEF DESCRIPTION OF THE DRAWINGS

These and other characteristics of the present invention will become apparent from the following description of a form of embodiment, given as a non-restrictive example, with reference to the attached drawings wherein:
- fig. 1 is a left side view of an apparatus according to the present invention, mounted on an agricultural collection machine, in the working position;
- fig. 2 is a left side view of the apparatus in fig. 1, in the inactive position;
- fig. 3 is a schematic rear view of the apparatus in fig. 1 in the working position;
- fig. 4 is a right side view of the apparatus in fig. 3 in the working position;
- fig. 5 is a schematic rear view of the apparatus in fig. 1 in a first intermediate position between the working position and the inactive position;
- fig. 6 is a right side view of the apparatus according to the invention, in the position of fig. 5;
- fig. 7 is a schematic rear view of the apparatus in fig. 1 in a second intermediate position between the working position and the inactive position;
- fig. 8 is a right side view of the apparatus according to the invention, in the position of fig. 7;
- fig. 9 is a schematic rear view of the apparatus in fig. 1 in the inactive position;
- fig. 10 is a right side view of the apparatus according to the invention, in the position of fig. 9, and

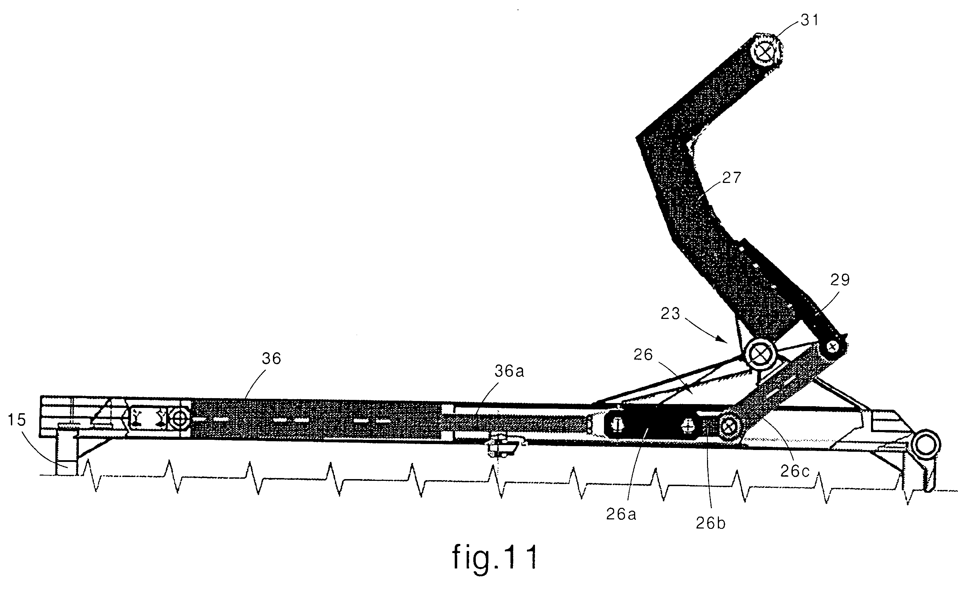

- fig. 11 is an enlarged rear view of the actuation means of the apparatus in fig. 1.

### DESCRIPTION OF ONE FORM OF EMBODIMENT

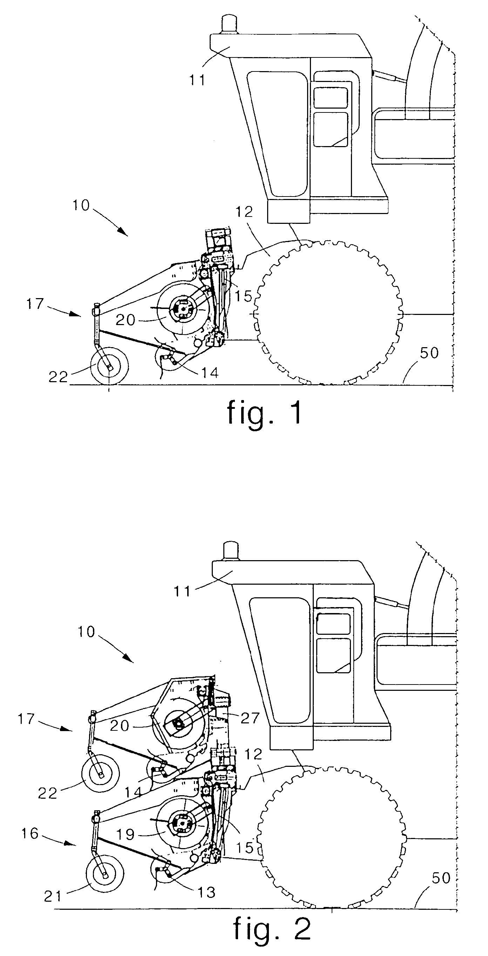

With reference to figs. 1 and 2, an apparatus 10 to collect forage or similar agricultural products according to the present invention is mounted on the front part of an agricultural collection machine 11 of a known type, such as for example a self-propelled hay-cutter or fodder-cutter or suchlike.

The apparatus 10 comprises a rear frame 15 mounted in removable manner on a front movable structure 12 of the machine 11.

The apparatus 10 also comprises two operating parts 16 and 17, independent of each other, both mounted on the frame 15.

Each operating part 16 and 17 comprises a front collection roller 13, respectively 14, a conveyor roller 19, respectively 20, arranged centrally, and also a front supporting wheel 21, respectively 22, arranged in contact with the ground 50 and forwards with respect to the direction of movement of the machine 11.

The collection rollers 13 and 14, the conveyor rollers 19 and 20 and the supporting wheels 21 and 22 are of a known type, and therefore they are only shown schematically in the drawings.

To give an indication, each operating part 16 and 17 is about 2.5 m long and about 1.1 m high.

The first operating part 16 is mounted able to slide horizontally on guides 25 of the frame 15 and is movable between two extreme positions, respectively a working position (shown in figs. 1, 3, 4, 5, 6, 7 and 8) and an inactive position, that is, when the agricultural machine 11 is being transferred (shown in figs. 2, 9 and 10).

The movement of the operating part 16 is achieved by a first fluid-dynamic actuator 30, mounted on the upper part of the frame 15, able to displace the operating part 16 horizontally between an extreme working position (shown in figs. 1, 3, 5, and 7) and a central inactive position (shown in figs. 2 and 9). In the working position the operating part 17 is exactly adjacent to the operating part 16, so that together they define a collection zone with a width of about 5 m.

The second operating part 17 is actuated by a second fluid-dynamic actuator 36, with a telescopic piston, attached above the frame 15, and having its shaft 36a hinged to an articulated lever 26, connected to a first elbow-shaped arm 27. The elbow-shaped arm 27 has one end hinged to the frame 15 at a first pivoting point 23, raised with respect to the longitudinal axis of the fluid-dynamic actuator 36, and is mounted rotatable at the other end on the operating part 17 by means of a first pin 31.

A second elbow-shaped arm 28 is also hinged at one end to the frame 15, with the other end connected to the operating part 17 by means of a second pin 32.

The articulated lever 26 comprises a first segment 26a hinged at one end to the shaft 36a of the fluid-dynamic actuator 36, a central segment 26b hinged to the free end of the first segment 26a, and a third segment 26c having one end connected, by means of a bar 29, to the first elbow-shaped arm 27, and the other end hinged to the central segment 26b.

It should be noted that the overall transverse space occupied by the frame 15 and the actuators 30 and 36 attached thereto is less than the length of each of the operating parts 16 and 17. In this way, since there are no actuator members arranged at the sides of the operating parts 16 and 17 either when they are in the inactive position or even in the working position, the whole length of each operating part 16 and 17 can be used to house the corresponding conveyor roller 19 and 20, which can have a length substantially equal to the length of the maximum road space allowed.

The apparatus 10 as described heretofore functions as follows.

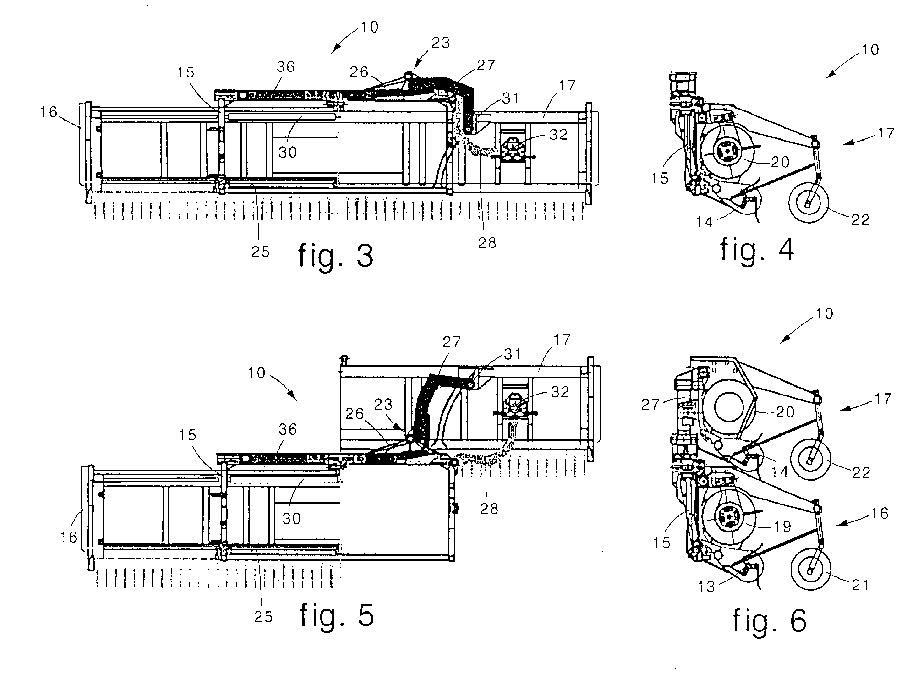

In normal working conditions, that is, when the agricultural machine 11 is performing the collecting operation, the apparatus 10 is in the positions shown in figs. 1 and 3. The two operating parts 16 and 17 are adjacent to each other so as to form a single collection combination or unit, with the collection rollers 13 and 14 aligned horizontally and arranged very near the ground 50.

With the apparatus 10 in this position, the operator of the machine 11 has optimum visibility, hardly limited at all by the apparatus 10 itself, since the operating parts 16 and 17, and in particular the collection rollers 13 and 14 and the conveyor rollers 19 and 20, are in a very low position with respect to the driver's cabin.

To take the operating parts 16 and 17 to the inactive position, that is, to allow the machine 11 to travel over normal roads with the apparatus 10 mounted at the front, the actuators 30 and 36 are actuated in a coordinated manner as follows.

The actuator 36 is actuated to translate the second operating part 17, keeping it substantially horizontal, until it is taken to the first intermediate position shown in figs. 5 and 6.

The linear thrust exerted by the actuator 36 generates a moment in the pivoting point 23 which takes the first elbow-shaped arm 27 to rotate upwards. The articulated lever 26 also intervenes in this operation, which allows optimum fluidity of movement and considerably limits the flexion forces on the shaft 36a.

During this step, the second elbow-shaped arm 28 is induced to rotate and supplies support to the operating part 17, assisting the work of the first arm 27.

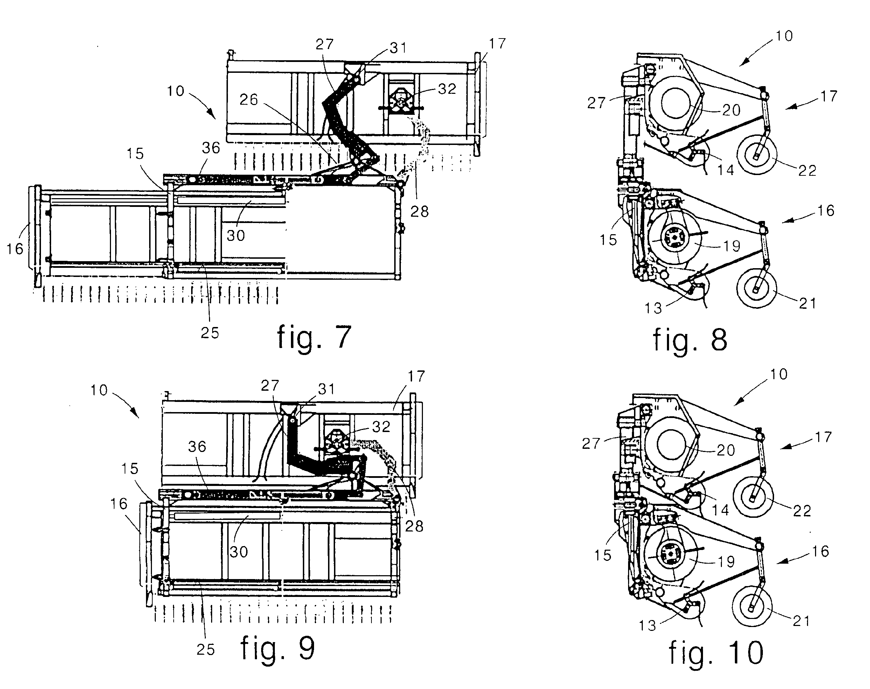

The actuator 30 is then driven (figs. 7 and 8), in order to displace the first operating part 16 towards the center of the frame 15, so as to keep the baricenter of the collection unit substantially centered with respect to the frame 15, in spite of the movement of the two operating parts 16 and 17.

The subsequent step (figs. 9 and 10) provides for the final positioning of the two operating parts 16 and 17 which find themselves one above the other in a substantially central position with respect to the frame 15.

In this position the apparatus 10 occupies minimal space, both width-wise, since it is equal to the length of one of the operating parts 16 and 17, that is, about 2.5 m, and also height-wise, since it is little more than double the height of the two operating parts 16 and 17, that is, little more than 2.2 m.

Moreover, since the translation movement of the second operating part 17 occurs so that it is kept substantially horizontal, the collection roller 14 and the conveyor roller 20 remain in their lower position, even in this inactive position (fig. 2); consequently the driver of the agricultural machine 11 retains a very good visibility, which allows him to see the ground 50 or road surface just a few meters in front of his observation point, in spite of the fact that in the transport position the entire apparatus 10 is raised from the ground 50.

The changeover from the inactive position to the working position of the operating parts 16 and 17 occurs in the inverse order from that described heretofore.

It is clear that modifications and/or additions of parts can be made to the apparatus 10 as described heretofore, without departing from the field and scope of the present invention.

For example, instead of the fluid-dynamic actuators, it is equally possible to use drive means associated with suitable servomechanisms.

It is also clear that, although the present invention has been described with reference to a specific example, a person of skill in the art shall certainly be able to achieve many other forms of embodiment of the apparatus described above, all of which shall come within the field and scope of the present invention.

## Claims

1. Apparatus to collect forage or similar agricultural products, able to be mounted on an agricultural collection machine (11), comprising a first and a second operating part (16, 17), each provided with substantially horizontal collection means (13, 14), and supporting means (15) able to be associated with said agricultural machine (11) and able to support said two operating parts (16, 17), said two operating parts (16, 17) being able to assume respective working positions wherein they are adjacent to each other on a horizontal plane and protrude laterally, at least partly, on opposite sides, with respect to said agricultural machine (11), **characterized in that** each of said two operating parts (16, 17) is supported autonomously by said supporting means (15), that said first operating part (16) is able to slide axially with respect to said supporting means (15), between said working position and an inactive position wherein it is centered with respect to said agricultural machine (11), and **in that** said second operating part (17) is able to be translated, keeping itself substantially horizontal, between said working position and an inactive position wherein it is centered with respect to said agricultural machine (11) and positioned above said first operating part (16).

2. Apparatus as in claim 1, **characterized in that** actuation means (30, 36) are provided to effect the movements, in coordinated manner, of said first and second operating parts (16, 17), so that the baricenter of the combination consisting of said two operating parts (16, 17) remains substantially in a centered position with respect to said agricultural machine (11), also during said movements.

3. Apparatus as in claim 2, wherein said collection means comprise at least a collection roller (13, 14) mounted in a lower zone of the corresponding operating part (16, 17), in order to be near the ground (50) when each operating part (16, 17) is in the working position, **characterized in that** said actuation means are able to make said second operating part (17) make translatory movements keeping it substantially horizontal, so that the relative collection roller (14) is able to remain in its lower position even when said second operating part (17) is in the inactive position, to allow the driver of said agricultural machine (11) better visibility.

4. Apparatus as in claim 2, **characterized in that** said actuation means comprise at least a first fluid-dynamic actuator (30) able to displace said first operating part (16) horizontally.

5. Apparatus as in claim 4, **characterized in that** said first fluid-dynamic actuator (30) is attached to said supporting means (15) and is connected to said first operating part (16).

6. Apparatus as in claim 2, **characterized in that** said actuation means comprise at least a second fluid-dynamic actuator (36) able to make rotate at least a first elbow-shaped arm (27) having one end hinged to said supporting means (15) at a pivoting point (23) and a second end associated with said second operating part (17) by means of first pin means (31).

7. Apparatus as in claim 6, **characterized in that** a second elbow-shaped arm (28) is hinged at one end to said supporting means (15) and associated to said second operating part (17) by means of second pin means (32).

8. Apparatus as in claims 4 and 6, **characterized in that** said first and second fluid-dynamic actuators (30, 36) are able to be actuated in coordinated manner in order to displace said two operating parts (16, 17) so as to keep the baricenter of the apparatus (10) constantly in a substantially central zone of said supporting means (15).

9. Apparatus as in claim 1, **characterized in that** said supporting means comprise a rear frame (15) able to be mounted on the movable structure (12) of said agricultural machine (11).

10. Apparatus as in claims 6 and 9, **characterized in that** said second fluid-dynamic actuator (36) is attached to the upper part of said rear frame (15), and **in that** the overall transverse space occupied by said rear frame (15) and by said second fluid-dynamic actuator (36) is less than the length of each of said operating parts (16, 17).

11. Apparatus as in claim 1, **characterized in that** each of said collection means (13, 14) is substantially as long as the corresponding operating part (16, 17).

12. Apparatus as in claim 1, **characterized in that** each operating part (16, 17) comprises a front supporting wheel (21, 22) .

13. Apparatus as in claim 1, **characterized in that** each operating part (16, 17) comprises a conveyor roller (19, 20) .

14. Apparatus as in claims 6 and 9, **characterized in that** said first operating part (16) is mounted able to slide horizontally on guides (25) of said rear frame (15).

15. Apparatus as in claim 6, **characterized in that** said pivoting point (23) of said first elbow-shaped arm (27) with said supporting means (15) is offset with respect to the longitudinal axis of said second actuator (36).

16. Apparatus as in claim 6, **characterized in that** the connection between said second actuator (36) and said first elbow-shaped arm (27) is effected by means of articulated means (26) comprising at least three bars (26a, 26b, 26c), hinged together, and able to allow fluidity of movement and to limit the flexion forces on the shaft (36a) of the second actuator (36).
